(19) **Europäisches Patentamt / European Patent Office / Office européen des brevets**

(11) **EP 4 386 658 A1**

(12) # EUROPEAN PATENT APPLICATION
published in accordance with Art. 153(4) EPC

(43) Date of publication:
**19.06.2024 Bulletin 2024/25**

(21) Application number: **22888999.4**

(22) Date of filing: **15.09.2022**

(51) International Patent Classification (IPC):
**G06T 5/50** (2006.01)

(52) Cooperative Patent Classification (CPC):
**G06T 5/50; G06T 15/503; G06T 17/20;**
G06T 2207/20221; G06T 2207/30201

(86) International application number:
**PCT/CN2022/118952**

(87) International publication number:
**WO 2023/077972 (11.05.2023 Gazette 2023/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.11.2021 CN 202111307659**

(71) Applicant: **Tencent Technology (Shenzhen) Company Limited**
**Shenzhen, Guangdong, 518057 (CN)**

(72) Inventor: **JIANG, Xinwei**
**Shenzhen, Guangdong 518057 (CN)**

(74) Representative: **Nederlandsch Octrooibureau**
**P.O. Box 29720**
**2502 LS The Hague (NL)**

(54) **IMAGE DATA PROCESSING METHOD AND APPARATUS, VIRTUAL DIGITAL HUMAN CONSTRUCTION METHOD AND APPARATUS, DEVICE, STORAGE MEDIUM, AND COMPUTER PROGRAM PRODUCT**

(57) The present disclosure provides an image data processing method and apparatus, a virtual digital human construction method and apparatus, a device, and a computer-readable storage medium. The image data processing method comprises: obtaining at least two initial face models to be fused, and obtaining fusion weights corresponding to the initial face models, the at least two initial face models having the same topological structure; determining edge vectors of connection edges in the initial face models and connection matrices of the initial face models on the basis of topological structure information of the initial face models; determining fusion edge vectors of the connection edges on the basis of the fusion weights corresponding to the initial face models and the edge vectors of the connection edges in the initial face models; determining fusion position information of vertices on the basis of the fusion edge vectors of the connection edges and the connection matrices; and generating a fused face model on the basis of the fusion position information of the vertices.

Acquire at least two to-be-fused initial facial models, and acquire a fused weight corresponding to each of the initial facial models — S101

Determine an edge vector of a connecting edge in each of the initial facial models and a connecting matrix of each of the initial facial models based on topological structure information of each of the initial facial models — S102

Determine a fused edge vector of the connecting edge based on the fused weight corresponding to each of the initial facial models and the edge vector of the connecting edge in each of the initial facial models — S103

Determine fused position information of each vertex based on the fused edge vector of the connecting edge and the connecting matrix — S104

Generate a fused facial model based on the fused position information of each vertex — S105

FIG. 3

**Description**

CROSS-REFERENCE TO RELATED APPLICATIONS

This disclosure is based upon and claims priority to Chinese Patent Application No. 202111307659.8, filed on November 05, 2021, and claims priority to the Chinese Patent.

FIELD OF THE TECHNOLOGY

This disclosure relates to an image processing technology, and relates to, but not limited to an image data processing method, a method and an apparatus for constructing a digital virtual human, a device, a storage medium, and a computer program product.

BACKGROUND OF THE DISCLOSURE

During animation design, game character design or digital virtual human design at present, two preset facial models may be mixed to obtain a head model of an animation character, a game character or a digital virtual human. A face mixing solution in the related art is mixing mainly based on mesh vertex positions. The main calculation process is to give two or more three-dimensional facial models with consistent topology, calculate the average position of each vertex of all input faces, take the average position as the vertex position of the mixed face and then perform post-processing operations such as Laplace smoothing on all the vertex positions entirely to obtain the final mixed facial model.

During face mixing by the method, all the input facial models are subjected to "alignment" pre-processing of face areas, that is, the vertex of the same face area is re-sampled to the same world coordinate position, and then the average position of the vertexes is calculated, otherwise, a scene where five sense organs are dislocated and an erroneous mixed result is obtained, especially for facial models with different facial sizes or different ratios of the five sense organs. However, the "alignment" operation on the input facial models will often introduce facial deformation, resulting in that the mixed facial model cannot completely remain the original facial features.

SUMMARY

Embodiments of this disclosure provide an image data processing method, a method and an apparatus for constructing a digital virtual human, a device, a storage medium, and a computer program product, that can improve the fusion accuracy and fusion efficiency of facial models.

Technical solutions in the embodiments of this disclosure are implemented as follows:

the embodiments of this disclosure provide an image data processing method applied to a computer device, and including:

acquiring at least two to-be-fused initial facial models, and acquiring a fused weight corresponding to each of the initial facial models, the at least two initial facial models having the same topological structure;

determining an edge vector of a connecting edge in each of the initial facial models and a connecting matrix of each of the initial facial models based on topological structure information of each of the initial facial models;

determining a fused edge vector of the connecting edge based on the fused weight corresponding to each of the initial facial models and the edge vector of the connecting edge in each of the initial facial models;

determining fused position information of each vertex based on the fused edge vector of the connecting edge and the connecting matrix; and

generating a fused facial model based on the fused position information of each vertex.

The embodiments of this disclosure provide a method for constructing a digital virtual human, including:

acquiring facial model information of the digital virtual human, the facial model information being obtained by the image data processing method provided by the embodiments of this disclosure;

acquiring limb model information of the digital virtual human; and

constructing the digital virtual human based on the facial model information and the limb model information.

The embodiments of this disclosure provide a facial model fusing apparatus, including:

a first acquisition module, configured to acquire at least two to-be-fused initial facial models, and acquire a fused weight corresponding to each of the initial facial models, the at least two initial facial models having the same topological structure;

a first determining module, configured to determine an edge vector of a connecting edge in each of the initial facial models and a connecting matrix of each of the initial facial models based on topological structure information of each of the initial facial models;

a second determining module, configured to determine a fused edge vector of the connecting edge based on the fused weight corresponding to each of the initial facial models and the edge vector of the connecting edge in each of the initial facial models;

a third determining module, configured to determine fused position information of each vertex based on the fused edge vector of the connecting edge and the connecting matrix; and

a model generation module, configured to generate a fused facial model based on the fused position information of each vertex.

The embodiments of this disclosure provide an apparatus for constructing a digital virtual human, including:

a second acquisition module, configured to acquire facial model information of the digital virtual human, the facial model information being obtained by the image data processing method provided by the embodiments of this disclosure;

a third acquisition module, configured to acquire limb model information of the digital virtual human; and

a construction module, configured to construct the digital virtual human based on the facial model information and the limb model information.

The embodiments of this disclosure provide a computer device, including:

a memory, configured to store an executable instruction; and

a processor, configured to implement, when executing the executable instruction stored in the memory, the method provided by the embodiments of this disclosure.

The embodiments of this disclosure provide a computer-readable storage medium. The computer-readable storage medium stores an executable instruction and is configured to implement the method provided by the embodiments of this disclosure when the processor executes the executable instruction.
The embodiments of this disclosure provide a computer program product. The computer program product includes a computer program or instruction and the computer program or instruction implements the method provided by the embodiments of this disclosure when being executed by the processor.
The embodiments of this disclosure have the following beneficial effects:
in the image data processing method provided by the embodiments of this disclosure, when the at least two initial facial models with the same topological structure are subjected to facial model fusion, the edge vector of the connecting edge in each of the initial facial models is subjected to weighted fusion by of the fused weight corresponding to each of the initial facial models to obtain the fused edge vector of the connecting edge; in the embodiments of this disclosure, the fused edge vector of each connecting edge of the facial models is determined by the fused weight, then the fused position information of each vertex is calculated inversely according to the fused edge vector of the connecting edge to obtain the final facial model; when the fused position information of each vertex is inversely calculated by the fused edge vector of the connecting edge, the fused position of the vertex will be constrained by the position information of the other vertex located at the same connecting edge and the fused edge vector of the connecting edge; and compared with the method for independently calculating the vertex in the related art, the "dislocation problem" of the five sense organs can be effectively avoided, thereby ensuring that each part in the facial models is not dislocated or deformed, and ensuring the fusion accuracy of the facial models.

BACKGROUND OF THE DISCLOSURE

FIG. 1 is a schematic structural diagram of a human face fusion system architecture according to an embodiment of this disclosure;

FIG. 2 is a schematic structural diagram of a terminal according to an embodiment of this disclosure;

FIG. 3 is a schematic diagram of an implementation process of an image data processing method according to an embodiment of this disclosure;

FIG. 4 is a schematic diagram of another implementation process of an image data processing method according to an embodiment of this disclosure;

FIG. 5 is a schematic diagram of yet another implementation process of an image data processing method according to an embodiment of this disclosure;

FIG. 6 is a schematic diagram of still another implementation process of a human face fusion method according to an embodiment of this disclosure;

FIG. 7 is a schematic diagram of setting a human face mixed weight according to an embodiment of this disclosure;

FIG. 8A is a schematic diagram of a start interface of a human face mixing tool developed by a human face model method according to an embodiment of this disclosure;

FIG. 8B is a schematic diagram of a use interface of a human face mixing tool developed by a human face model method according to an embodiment of this disclosure;

FIG. 9A is a schematic diagram of an input neutral human face model;

FIG. 9B is a schematic diagram of a result of neutral human face fusion performed by a human face fusion method according to an embodiment of this disclosure;

FIG. 10A is a schematic diagram of an input eye-closing expression human face model;

FIG. 10B is a schematic diagram of a result of eye-closing human face fusion performed by a human face fusion method according to an embodiment of this disclosure;

FIG. 11A is a schematic diagram of an input look-up expression human face model; and

FIG. 11B is a schematic diagram of a result of look-up human face fusion performed by a human face fusion method according to an embodiment of this disclosure.

DESCRIPTION OF EMBODIMENTS

To make the objectives, technical solutions, and advantages of this disclosure clearer, the following describes this disclosure in further detail with reference to the accompanying drawings. The described embodiments are not to be considered as a limitation to this disclosure. All other embodiments obtained by a person of ordinary skill in the art without creative efforts shall fall within the protection scope of this disclosure.

In the following description, the term "some embodiments" describes subsets of all possible embodiments, but it may be understood that "some embodiments" may be the same subset or different subsets of all the possible embodiments, and can be combined with each other without conflict.

In the following description, the term "first/second/third" is only intended to distinguish similar objects and does not represent a specific order of objects. It may be understood that the term "first/second/third" may interchange a specific sequence or order, so that the embodiments of this disclosure described here can be implemented in other orders than those illustrated or described herein.

Unless otherwise defined, meanings of all technical and scientific terms used in this specification are the same as those usually understood by a person skilled in the art to which this disclosure belongs. The terms used in the specification are only for the purpose of describing the embodiments of this disclosure and are not intended to limit this disclosure.

Before the embodiments of this disclosure are further described in detail, a description is made on nouns and terms in the embodiments of this disclosure, and the nouns and terms in the embodiments of this disclosure are applicable to the following explanations.

1) Polygon mesh: A set representing vertexes and polygons of polyhedral shapes in three-dimensional computer graphics is generally composed of triangles, quadrilaterals or other simple convex polygons.

2) Vertex: The vertex refers to an intersection point of two or more straight lines or curves in geometry. In computer graphics, the three-dimensional model is generally represented as a polyhedron composed of triangles, where the vertex not only represents position information, but also includes information required by rendering, such as color, reflection characteristic, texture and surface normal.

The embodiments of this disclosure provided an image data processing method, an apparatus, a device, a storage medium, and a computer program product, which can solve the problem in the related art that vertex alignment processing is required before processing and smoothing processing is required after processing, and can improve the fusion accuracy and fusion efficiency of the facial models. The exemplary application of the computer device provided by the embodiments of this disclosure is described below. The computer device provided by the embodiments of this disclosure may be implemented as various types of user terminals, for example, a notebook computer, a tablet computer, a set-top box and a mobile device (such as a mobile phone, a portable music player, a personal digital assistant, a dedicated message device and a portable game device), or may be implemented as a server. The exemplary application in a case that the device is implemented as the terminal will be described below.

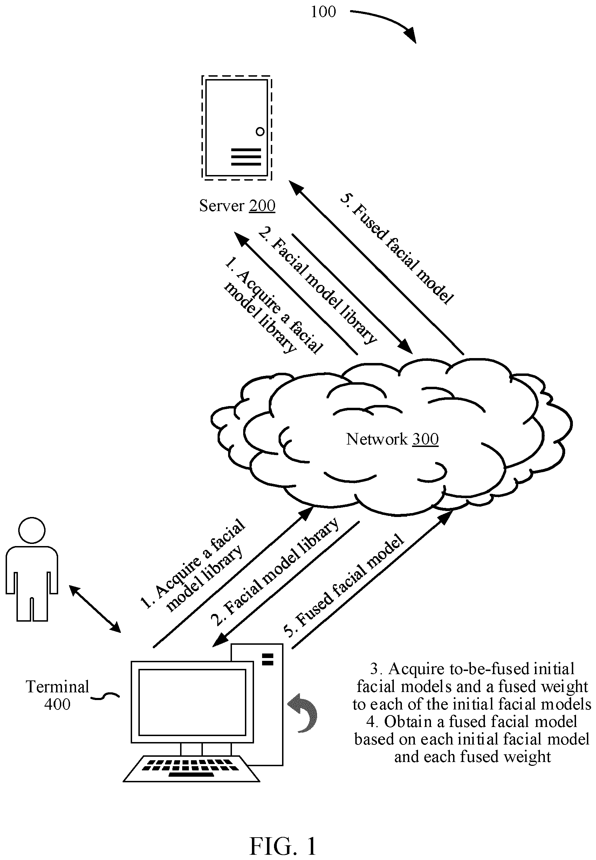

Referring to FIG. 1, FIG. 1 is a schematic diagram of a network architecture of a human face fusion system 100 according to an embodiment of this disclosure. As shown in FIG. 1, the system includes a server 200, a network 300 and a terminal 400, where the terminal 400 is connected to the server 200 through the network 300, and the network 300 may be a wide area network or a local area network, or a combination of the wide area network or the local area network.

In the embodiments of this disclosure, digital virtual human design is taken as an example for description. A digital virtual human refers to a virtual human with high similarity with a real person. The digital virtual human design includes facial model design, hairstyle design, body type design and many other aspects, where the facial model design is the most important aspect. In the embodiments of this disclosure, the terminal 400 is configured to perform facial model design and display the designed facial model on a graphical interface 410; the server 200 is configured to store a facial model library; and the terminal 400 may acquire each initial facial model in the facial model library from the server 200, or may upload the designed facial model to the server 200.

The terminal 400 may acquire the facial model library directly from the server 200 and store the facial model library in a local storage space, or may acquire the required initial facial model from the facial model library of the server 200 every time the facial model fusion is required. In the embodiments of this disclosure, the case where the terminal 400 acquires the facial model library and store the facial model library locally is taken as an example for description. After acquiring the facial model library, the terminal 400 may select a to-be-fused initial facial model from the facial model library. The terminal 400 acquires a fused weight of each initial facial model set by a modeler, and then determines a fused edge vector of a connecting edge based on each initial facial model and each fused weight so as to determine fused position information of each vertex based on the fused edge vector and a connecting matrix of the initial facial model to obtain a fused facial model and output the fused facial model. The fused weight refers to a weight or weighting factor used for edge vector fusion, which may be preset or preconfigured. After obtaining the fused facial model, the terminal 400 may further upload the obtained fused facial model to the server for other people to use, for example, may be for other designers to perform other design on a virtual human based on the fused facial model, for example, the design of clothing, accessories, hairstyles, body types and other aspects.

Since the facial model of the digital virtual human is the first and most important link in the digital virtual human design, after the terminal 400 obtains one group of initial facial models (initial neutral human face models or initial expression human face models), a three-dimensional human face model or a corresponding human face expression model that the modeler wants can be rapidly mixed by the face fusion method provided by the embodiments of this disclosure, so that the time of manufacturing and modifying the model by the face modeler can be greatly saved, the result of the facial model obtained through fusion is smooth, the problem of dislocation and unsmooth displacement caused by facial model fusion and the problem of long cycle of the digital human design caused by repeated modification and adjustment can be solved, and the whole design time of the digital virtual human can be shortened greatly.

In some embodiments, the fusion process of the facial models may be performed by the server 200. After the terminal 400 selects the to-be-fused initial facial models and obtains the fused weight of each initial facial model, each initial facial model and the corresponding fused weight may be transmitted to the server 200, and the server 200 performs fusion processing on the facial model to obtain the fused facial model and transmit the fused facial model to the terminal 400, so that the terminal 400 determines whether the fused facial model meets the own requirement. In case that the fused facial model meets the own requirement, the server 200 will save the fused facial model.

In some embodiments, the server 200 may be an independent physical server, may be a server cluster composed of a plurality of physical servers or a distributed system, or may be a cloud server providing basic cloud computing services such as a cloud service, a cloud database, cloud computing, a cloud function, cloud storage, a network service, cloud communication, a middleware service, a domain service, a security service, CDN, big data and an artificial intelligence platform. The terminal 400 may be a smartphone, a tablet computer, a notebook computer, a desktop computer, a smart speaker, a smartwatch, or the like, but is not limited thereto. The terminal and the server may be connected directly or indirectly through wired or wireless communication, which is not limited in the embodiments of this disclosure.

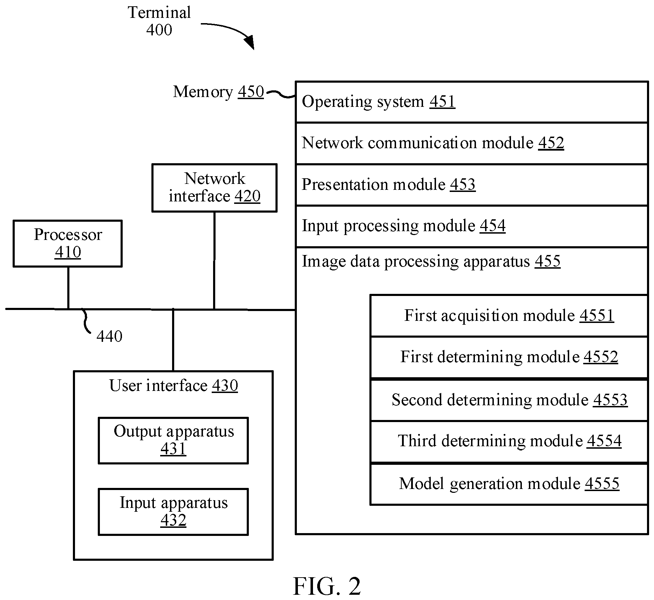

Referring to FIG. 2, FIG. 2 is a schematic structural diagram of a terminal 400 according to an embodiment of this disclosure. The terminal 400 shown in FIG. 2 includes: at least one processor 410, a memory 450, at least one network interface 420, and a user interface 430. Components in the terminal 400 are coupled together by using a bus system 440. It may be understood that, the bus system 440 is configured to implement connection and communication among the components. In addition to a data bus, the bus system 440 further includes a power bus, a control bus, and a state signal bus. But, for ease of clear description, all types of buses in FIG. 2 are marked as the bus system 440.

The processor 410 may be an integrated circuit chip and has a signal processing capability, for example, a general processor, a digital signal processor (DSP), other programmable logic devices, discrete gates or transistor logic devices, or discrete hardware components, or the like. The general processor may be a microprocessor or any conventional processor.

The user interface 430 includes one or more output apparatuses 431 that enables presentation of media content, including one or more loudspeakers and/or one or more visual display screens. The user interface 430 further includes one or more input apparatuses 432, including a user interface part conducive to user input, for example, a keyboard, a mouse, a microphone, a touch display screen, a camera, and other input buttons or controls.

The memory 450 may be removable, non-removable, or a combination thereof. The exemplary hardware device includes a solid-state memory, a hard-disk driver, an optical driver and the like. The memory 450 optionally includes one or more storage devices that are far away from the processor 410 in a physical position.

The memory 450 may include a volatile memory or a non-volatile memory, or may include both a volatile memory and a non-volatile memory. The non-volatile memory may be a read only memory (ROM), and the volatile memory may be a random access memory (RAM). The memory 450 described in the embodiments of this disclosure aims to include any suitable type of memory.

In some embodiments, the memory 450 can store data to support various operations. The examples of the data include a program, a module and a data structure or a subset or a superset thereof. Exemplary description is as follows:

an operating system 451, including a system program for processing various basic system services and performing hardware-related tasks, such as a framework layer, a kernel library layer, and a driver layer, for implementing various basic services and processing hardware-based tasks;

a network communication module 452, configured to arrive at other computing devices through one or more (wired or wireless) network interfaces 420, where the exemplary network interface 420 includes: Bluetooth, wireless fidelity (WiFi) and a universal serial bus (USB);

a presentation module 453, configured to enable presentation of information through one or more output apparatuses 431 (such as a display screen and a loudspeaker) associated with the user interface 430 (for example, a user interface for operating a peripheral device and displaying content and information); and

an input processing module 454, configured to detect one or more user inputs or interactions from one or more of one of one or more input apparatuses 432, and translate the detected inputs or interactions.

In some embodiments, the apparatus provided by the embodiments of this disclosure may be implemented by software. FIG. 2 shows a facial model fusion apparatus 455 stored in a memory 450, which may be software in the form of a program or a plug-in, including the following software modules: a first acquisition module 4551, a first determining module 4552, a second determining module 4553, a third determining module 4554 and a model generation module 4555. These modules are logic, so the modules may be arbitrarily combined or further split according to the implemented function. The functions of each module will be described below.

In some other embodiments, the apparatus provided by hardware. As an example, the apparatus provided by the embodiments of this disclosure may be a processor in the form of a hardware decoding processor and is programmed to perform the image data processing method provided by the embodiments of this disclosure. For example, the processor in the form of the decoding processor may adopt one or more application specific integrated circuit (ASIC), a DSP, a programmable logic device (PLD), a complex programmable logic device (CPLD), a fieldprogrammable gate array (FPGA) or other electronic elements.

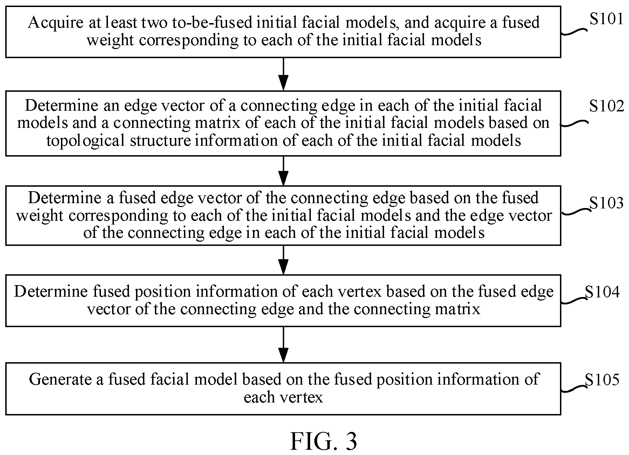

The embodiments of this disclosure provide an image data processing method, which may be applied to a computer device. The computer device may be a terminal such as a computer, a smartphone and a tablet computer, or may be a server. FIG. 3 is a schematic flowchart of an image data processing method according to an embodiment of this disclosure. Each step will be described with reference to FIG. 3.

S101: Acquire at least two to-be-fused initial facial models, and acquire a fused weight corresponding to each of the initial facial models.

The at least two initial facial models have the same topological structure, and the initial facial models are three-dimensional models. The topological structure of one initial facial model includes vertexes and connection relationship between vertexes in the initial facial model. Having the same topological structure refers to that the number of the vertexes in different initial facial models are the same, and further, the connection relationship between vertexes in the initial facial models is the same, i.e., the pairs of vertexes forming the connections in the respective initial facial models are the same. The initial facial models may be initial neutral facial models, or may be initial expression facial models, where the initial neutral facial models refer to facial models without expressions, and may include eye-opening facial models without expressions, and eye-closing facial models without expressions. The initial expression facial models refer to facial models with expressions that are obtained by performing deformation processing on the facial models without expressions, for example, may be smile facial models, laugh facial models and sad facial models. The facial models in the embodiments of this disclosure may refer to human face models, or may be facial models of cartoon figures or facial models of animation characters. No matter what kind of facial models, the facial models are required to include basic facial physiological features, for example, mouth, eyes, nose, ears, eyebrows and other parts.

In a case that step S101 is implemented by the terminal, the facial model library may be acquired from the server from the terminal, so that the at least two to-be-fused initial facial models are selected from the facial model library based on the received selection operation for the at least two initial facial models. After the to-be-fused initial facial models are selected, the fused weight of each initial facial model is acquired based on the received setting operation for the fused weight of each initial facial model. For example, different facial organs in one initial facial model may have the same fused weight; and different facial organs may have different fused weights, for example, the eyes correspond to one fused weight, the mouth corresponds to one fused weight, and the ears correspond to one fused weight, where the fused weight of the eyes and the mouth are different. The fused weight of the same sense organ in the five sense organs is the same, for example, the fused weights of the left eye and the right eye are the same, and the fused weights of the left ear and the right ear are the same.

Step S102: Determine an edge vector of a connecting edge in each of the initial facial models and a connecting matrix of each of the initial facial models based on topological structure information of each of the initial facial models.

The topological structure information of the initial facial models includes position information of each vertex included in the initial facial models, and connecting information between different vertexes, i.e., the topological structure information of the initial facial models includes information on vertexes and connection relationship between vertexes in the initial facial models. The edge vector of the connecting edge in each of the initial facial models is determined based on the position information of two vertexes of the connecting edge. For example, the vertexes of the edge $e_{ij}$ are $v_i$ and $v_j$, the position information of $v_i$ is $(x_i, y_i, z_i)$, the position information of $v_j$ is $(x_j, y_j, z_j)$, then the edge vector of $e_{ij}$ is $(x_i-x_j, y_i-y_j, z_i-z_j)$.

The connecting matrix of the initial facial model represents vertex information of each connecting edge. Assuming that the initial facial model has V vertexes and E connecting edges, the dimension of the connecting matrix of the initial facial model is E*V, where in a case that the vertex $V_i$ and the vertex $V_j$ are two vertexes of a pth connecting edge, an element $M_{pi}$ in a pth row and an ith column, and an element $M_{pj}$ in the pth row and a jth column are first preset values, and other columns in the pth row are second preset values. For example, the first preset value is 1, and the second preset value is 0.

Step S 103: Determine a fused edge vector of the connecting edge based on the fused weight corresponding to each of the initial facial models and the edge vector of the connecting edge in each of the initial facial models.

During implementation of step S 103, the fused weight corresponding to the connecting edge is determined first, where in case that different face areas in one initial facial model correspond to the same fused weight, the fused weight corresponding to each connecting edge is the fused weight corresponding to the initial facial model. In case that different face areas in one initial facial model correspond to different fused weights, it is necessary to determine the face area where the connecting edge is located and then determine the fused weight corresponding to the face area where the connecting edge is located as the fused weight corresponding to the connecting edge. Then, the edge vector of the connecting edge in each of the initial facial models and the corresponding fused weight are subjected to weighted summation to obtain the fused edge vector of the connecting edge.

For example, there are two initial facial models, for the connecting edge eij, the corresponding fused weights are respectively w1 and w2, then, the fused edge vector of the connecting edge is eij 1* w1+eij2* w2. eij 1 and eij2 are the edge vectors of the connecting edge eij in the two initial facial models.

Step S 104: Determine fused position information of each vertex based on the fused edge vector of the connecting edge and the connecting matrix.

Step S 104 may be implemented in different ways according to different types of initial facial models.

For example, in a case that the initial facial model is an initial neutral facial model, since the initial neutral facial model does not have an expression, the position of each corresponding vertex in different initial neutral models is different little, the fused edge matrix may be constructed based on the fused edge vector, then based on the relationship that the connecting matrix multiplied by a vertex fused position matrix is equal to the fused edge matrix and on the premise that the connecting matrix and the fused edge matrix are known, the vertex fused position matrix is solved, and the fused position matrix may be a matrix with the dimension being V*3, where V is the total number of the vertexes, and three elements in each row of the fused position matrix correspond to the fused position coordinates of one vertex in three dimensions, so the fused position information of each vertex is obtained after the fused position matrix is solved.

For example, in a case that the initial facial model is the initial expression facial model, one fusion result of the initial neutral facial model is acquired first, that is the fused neutral facial model, and then the fused position matrix of the vertex is obtained through the process similar to the initial neutral facial model. However, the fused position matrix is not the final fused position information, but serves as a candidate. It is necessary to determine a first vertex set which moves relative to the initial neutral facial model and a second vertex set which does not move relative to the initial neutral facial model from the initial expression facial model. The fused position information of each second vertex in the second vertex set is determined based on the fused neutral facial model. For example, the position information corresponding to the second vertex in the fused neutral facial model is determined as the fused position information of the second vertex. The fused position information of each first vertex in the first vertex set is determined based on the candidate fused position matrix.

Step S105: Generate a fused facial model based on the fused position information of each vertex.

The fused facial model may be generated after the fused position information of each vertex is determined. In a case that step S105 is performed by the terminal, after step S105, the fused facial model may be displayed in a display apparatus by the terminal. In case that step S105 is performed by the server, after step S105, the fused facial model may be transmitted by the server to the terminal which requests to perform facial model fusion, and then the fused facial model is displayed by the terminal.

In the image data processing method provided by the embodiments of this disclosure, when the at least two initial facial models with the same topological structure are subjected to facial model fusion, the edge vector of the connecting edge in each of the initial facial models is subjected to weighted fusion by of the fused weight corresponding to each of the initial facial models to obtain the fused edge vector of the connecting edge; in the embodiments of this disclosure, the fused edge vector of each connecting edge of the facial models is determined by the fused weight, then the fused position information of each vertex is calculated inversely according to the fused edge vector of the connecting edge to obtain the final facial model; when the fused position information of each vertex is inversely calculated by the fused edge vector of the connecting edge, the fused position of the vertex will be constrained by the position information of the other vertex located at the same connecting edge and the fused edge vector of the connecting edge; and compared with the method for independently calculating the vertex in the related art, the "dislocation problem" of the five sense organs can be effectively avoided, thereby ensuring that each part in the facial models is not dislocated or deformed, and ensuring the fusion accuracy of the facial models.

In some embodiments, "acquire a fused weight corresponding to each of the initial facial models" in step S101 may be implemented through the following steps S1011 to S1012:

step S1011: Acquire a preset face dividing area graph.

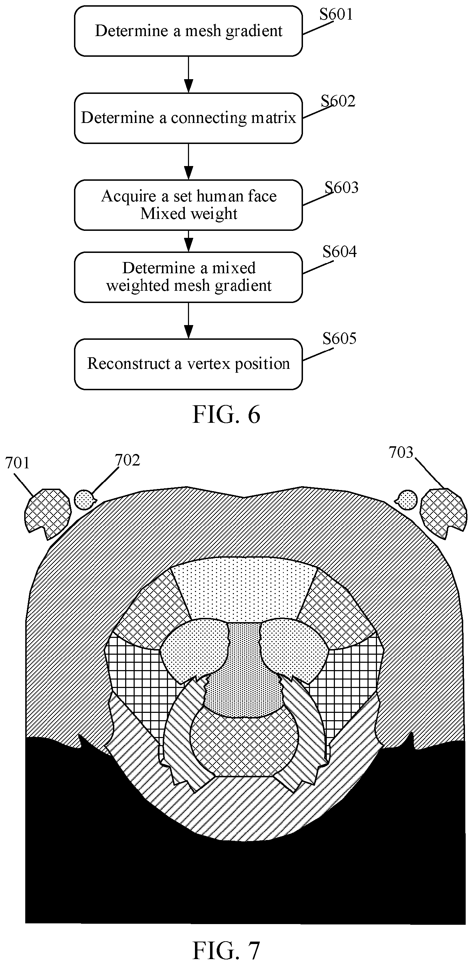

The face dividing area graph may be shown in FIG. 7. It can be seen from FIG. 7 that the face dividing area graph includes a plurality of areas, where different areas correspond to different physiological parts, including forehead, eyes, nose, mouth and the like. In the face dividing area graph shown in FIG. 7, since areas filled with different patterns are different types of areas, for example, an area 701 and an area 702 in FIG. 7 are filled with different patterns, so the area 701 and the area 702 are different types of areas. However, the area 701 and the area 703 in FIG. 7 are filled with the same pattern, so the area 701 and the area 703 are the same type of area.

Step S1012: Acquire fused weights of different areas in each of the initial facial models in response to weight setting operations of different areas in each of the initial facial models.

In the embodiments of this disclosure, different fused weights are set for different areas in the initial facial model, that is, different fused weights are set for different physiological parts. For example, there are two initial facial models, where a modeler wants eyes in the fused facial model are closer to eyes in a first model and the mouth is closer to a mouth in a second model, then the fused weight of the eyes in the first model is set higher, and the fused weight of the mouth in the first model is set lower. For example, the fused weight of the eyes in the first model is 0.8, and the fused weight of the eyes in the second model is 0.2; and the fused weight of the mouth in the first model is 0.3, and the fused weight of the mouth in the second model is 0.7. In this way, the diversity and flexibility of the fused facial model can be improved.

In some embodiments, "determine an edge vector of a connecting edge in each of the initial facial models and a connecting matrix of each of the initial facial models based on topological structure information of each of the initial facial models" in step S102 may be implemented by the following steps S1021 to S1023. Each step is described below.

Step S1021: Acquire position information of vertexes in each of the initial facial models, and connecting information of the vertexes based on the topological structure information of each of the initial facial models.

Here, the position information of the vertexes is three-dimensional position information. For example, the position information of the vertex vi is (xi, yi, zi), where xi, yi and zi respectively represent coordinates in an x-axis direction, a y-axis direction and a z-axis direction.

Step S1022: Determine the edge vector of the connecting edge in each of the initial facial models based on the position information of the vertexes in each of the initial facial models and the connecting information of the vertexes.

The connecting information between the vertexes represents whether two vertexes have a connecting relationship. In case that the two vertexes have the connecting relationship, the two vertexes have a connecting edge. The position information of the two vertexes of the connecting edge is subtracted to obtain the edge vector of the connecting edge. For example, the vertexes of the edge eij are vi and vj, the position information of vi is (xi, yi, zi), the position information of vj is (xj, yj, zj), then the edge vector of eij is (xi-xj, yi-yj, zi-zj).

Step S1 023: Determine a connecting matrix of each of the initial facial models based on the connecting information between the vertexes of each of the initial facial models.

In a case that the two vertexes have the connecting relationship, elements corresponding to the two vertexes in the connecting matrix are a first preset value. In a case that the two vertexes do not have the connecting relationship, the elements corresponding to the two vertexes in the connecting matrix are a second preset value. The first preset value and the second preset value are different. For example, the preset first value may be 1 and the preset second value may be 0. The two vertexes of a first connecting edge are an ith vertex vi and a jth vertex vj, that is, the ith vertex vi and the jth vertex vj have the connecting relationship. Elements corresponding to the two vertexes in the connecting matrix refer to an element in the first row and an ith column, and an element in the first row and a jth column. Assuming that the first preset value is 1, the element in the first row and the ith column and the element in the first row and the jth column in the connecting matrix are 1.

In some embodiments, "determine a fused edge vector based on the fused weight corresponding to each of the initial facial models and the edge vector of the connecting edge in each of the initial facial models" may be implemented by the following steps S1031 to S1033. Each step is described below.

Step S1031: Determine an area where a connecting edge is located based on position information of the vertexes of the connecting edge in each of the initial facial models.

In the embodiments of this disclosure, since the position information of the vertex is three-dimensional information, the edge vector is three-dimensional information and the face dividing area graph is a two-dimensional image, during the implementation of Step S1031, a three-dimensional edge vector of the connecting edge is mapped to a two-dimensional space through UV mapping to obtain a two-dimensional edge vector, and then an area where the connecting edge is located is determined through the two-dimensional edge vector.

During the implementation of step S1031, it is necessary to determine the area where each connecting edge is located. In the embodiments of this disclosure, the area where one connecting edge is located is taken as an example for description. Exemplarily, a first ray is determined based on a first endpoint of the connecting edge, a second ray is determined based on a second endpoint, the number of first intersection points of the first ray and each area is respectively determined, and the number of second intersection points of the second ray and each area is determined. In case that the number of the first intersection points of the first ray and a certain area is an odd number, it means that the first endpoint is in the area; and in a case that the number of the first intersection points of the first ray and a certain area is an even number, it means that the first endpoint is outside the area. Similarly, in case that the number of the second intersection points of the second ray and a certain area is an odd number, it means that the second endpoint is in the area; and in case that the number of the second intersection points of the second ray and a certain area is an even number, it means that the second endpoint is outside the area, thereby determining the area where the first endpoint is located and the area where the second endpoint is located. In case that the first endpoint and the second endpoint are in the same area, the connecting edge is located in the area; and in case that the first endpoint and the second endpoint are in different areas, the areas where the first endpoint and the second endpoint are located are adjacent areas, thereby determining an intersection point of the connecting edge of a shared edge of the two areas, determining a first distance between the intersection point and the first endpoint and a second distance between the intersection point and the second endpoint, and determining the area corresponding to the larger distance of the first distance and the second distance as the area where the connecting edge is located.

For example, the first distance is greater than the second distance, then the area corresponding to the first distance is the area where the first endpoint is located, so the area where the first endpoint is located is determined as the area where the connecting edge is located.

Step S1032: Acquire each fused weight corresponding to the area in each of the initial facial models.

Each fused weight of the area in each of the initial facial models is acquired after the area where the connecting edge is located is determined. For example, the area where a certain connecting edge is located is a nose area, then each fused weight of the nose area in each of the initial facial models is acquired. For example, there are three initial facial models, and the fused weights of the nose area in each of the initial facial models are respectively 0.4, 0.2 and 0.2.

Step S1033: Perform weighted summation on the edge vector of the connecting edge in each of the initial facial models and each fused weight to obtain the fused edge vector of the connecting edge.

In step S1031 to S1033, the edge vector of the connecting edge in each of the initial facial models is subjected to weighted summation based on the fused weight which is preset for different types of areas in each of the initial facial models so as to obtain the fused edge vector of the connecting edge. The facial models are fused by taking the connecting edge as a granularity, thereby ensuring no great deformation of the fusion result and ensuring the fusion accuracy.

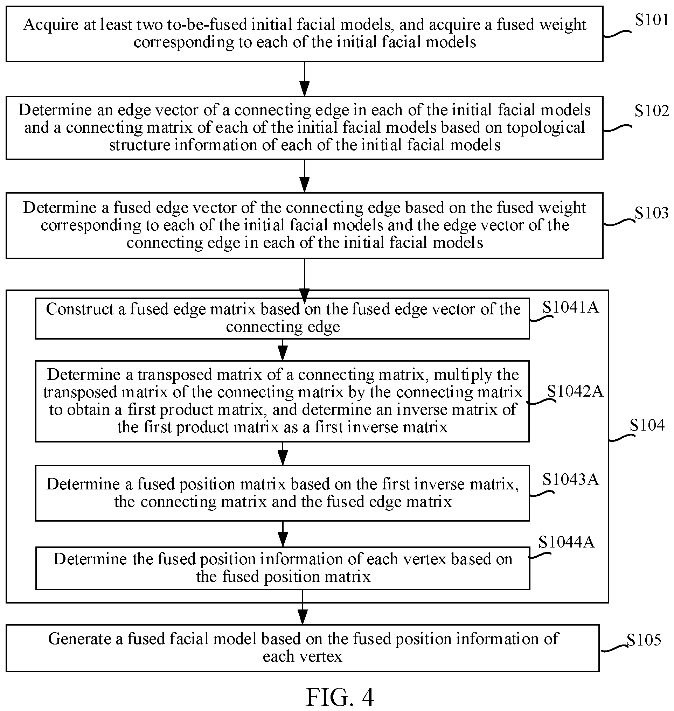

Since the initial facial model may be an initial neutral facial model, or may be an initial expression facial model, then in a case that the at least two initial facial models in the above embodiment are at least two initial neutral facial models, as shown in FIG. 4, "determine fused position information of each vertex based on the fused edge vector of the connecting edge and the connecting matrix" in step S104 may be implemented by the following steps S1041A to S1044A. Each step is described below with reference to FIG. 4.

Step S1041A: Construct a fused edge matrix based on the fused edge vector of the connecting edge.

In the embodiments of this disclosure, the fused edge vector is a vector of 1*3. Assuming that there are E connecting edges, the dimension of the constructed fused edge matrix D is E*3, and the fused edge vector of one connecting edge is one row vector in the fused edge matrix.

Step S 1042A: Determine a transposed matrix of the connecting matrix, multiply the transposed matrix of the connecting matrix by the connecting matrix to obtain a first product matrix, and determine an inverse matrix of the first product matrix as a first inverse matrix.

In the embodiments of this disclosure, assuming that the connecting matrix is M and the dimension is E*V, the transposed matrix of the connecting matrix is MT, the dimension is V*E, the dimension of the first product matrix is V*V, and the dimension of the first inverse matrix is V*V.

Step S1043A: Determine a fused position matrix based on the first inverse matrix, the connecting matrix and the fused edge matrix.

In the embodiments of this disclosure, the fused position matrix is represented by X. Since the connecting matrix M, the fused transposed matrix X and the fused edge matrix D meet a formula (1-1):

$$M \times X = D \tag{1-1},$$

then the fused position matrix X may be obtained by solving the formula (1-1). Since the connecting matrix M is not a non-singular matrix, it is necessary to select one fixed point as a Dirichlet boundary condition for solving, for example, one point on the edge of the neck in the facial model may serve as the fixed point.

In the embodiments of this disclosure, to make the obtained solution more stable, two sides of the formula (1-1) are multiplied simultaneously by the transposition of the M matrix to obtain a formula (1-2):

$$M^T \times M \times X = M^T \times D \tag{1-2},$$

so $X = (M^T \times M)^{-1} \times M^T \times D$ may be obtained, that is, the fused position matrix is the product of the first inverse matrix, the transposed matrix and the fused edge matrix. The dimension of the fused position matrix X is V*3.

Step S1044A: Determine the fused position information of each vertex based on the fused position matrix.

Three elements of each row in the fused position matrix correspond to three-dimensional fused position information of each vertex.

Through Steps 51041A to S1044A, after the fused edge vector of each connecting edge is obtained, it is unnecessary to perform other post-processing operation, and smooth and accurate fused position information may be obtained only through matrix calculation, so that the fusion efficiency can be improved, and the fusion accuracy can be ensured.

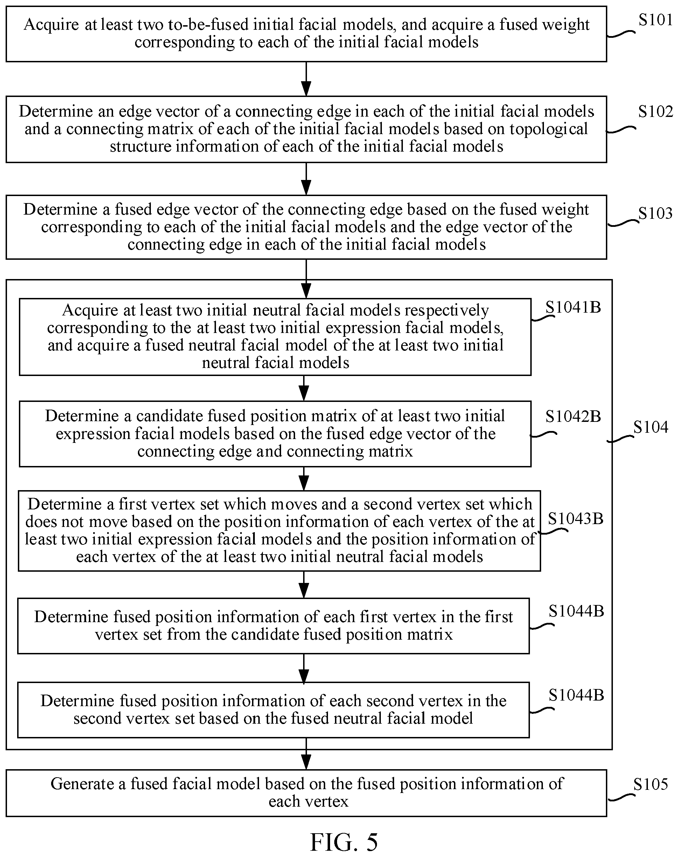

In some embodiments, in a case that the at least two initial facial models are at least two initial expression facial models, "determine fused position information of each vertex based on the fused edge vector of the connecting edge and the connecting matrix" in step S104 may be implemented through the steps S1041B to S1045B in FIG. 5. Each step is described below with reference to FIG. 5.

Step S1041B: Acquire at least two initial neutral facial models respectively corresponding to the at least two initial expression facial models, and acquire a fused neutral facial model of the at least two initial neutral facial models.

The expression facial model is obtained by performing deformation processing on the neutral facial model. One neutral facial model may be subjected to deformation process to obtain various expression facial models. For example, various expression facial models such as smile, laugh, shy and cry may be obtained. The expression facial models correspond to the same neutral facial model.

In a case that the initial facial model is an initial expression facial model, expression types corresponding to the at least two initial expression facial models are the same, at least two initial facial models corresponding to the smile expression may be fused, or the at least two initial facial models corresponding to the cry expression may be fused, but the initial facial model corresponding to the smile expression and the initial facial model corresponding to the cry expression may not be fused.

During implementation of step S1041B, the initial neutral facial model respectively corresponding to each initial expression facial model is respectively acquired. In case that the initial neutral facial model respectively corresponding to each of the initial expression facial models has been fused before step S1041B, the fused neutral facial model of the at least two initial neutral facial models may be acquired directly. In case that each of the initial neutral model is not fused before step S1041B, the at least two initial neutral facial models may be fused through steps S101 to S103 and steps S1041A to S1044A to obtain the fused neutral facial model.

Step S1042B: Determine a candidate fused position matrix of at least two initial expression facial models based on the fused edge vector of the connecting edge and connecting matrix.

Step S1042B may be implemented through the following steps S421 to S423:

Step S421: Construct a fused edge matrix based on the fused edge vector of the connecting edge.

The implementation process of step S421 is similar to that of step S1041A. The fused edge vector of one connecting edge is determined as a row vector in the fused edge matrix. Assuming that the initial expression facial model has E connecting edges, the dimension of the fused edge matrix D constructed at this time is E*3.

Step S422: Determine a transposed matrix of the connecting matrix, determining a first product matrix of the transposed matrix of the connecting matrix and the connecting matrix, and determining a first inverse matrix of the first product matrix.

Assuming that the connecting matrix is M, the first product matrix is $M^T \times M$, and the first inverse matrix is $(M^T \times M)^{-1}$.

Step S423: Determine the candidate fused position matrix of the at least two initial expression facial models based on the first inverse matrix, the connecting matrix and the fused edge matrix.

The implementation process of step S421 to S423 is similar to that of step S1041A to S1043A. The candidate fused position matrix may be obtained by solving the formula (1-2). In some embodiments, step S423 may be implemented through the following steps S4231 to S4232 so as to make the solved vertex position smoother.

Step S1043B: Determine a first vertex set which moves and a second vertex set which does not move based on the position information of each vertex of the at least two initial expression facial models and the position information of each vertex of the at least two initial neutral facial models.

Since the initial expression facial model is the facial model with an expression, even if for the same expression, the motion amplitude of the vertexes of different initial expression facial models are generally inconsistent, so the candidate fused position matrix obtained through step S423 often has a vertex displacement deviation relative to the initial neutral facial model. To better ensure the accuracy of the fused facial model, in this step, the first vertex set which moves relative to the initial neutral facial model and the second vertex set which does not move relative to the initial neutral facial model are determined first, the fused position information of each first vertex in the first vertex set is determined according to step S1044B, and the fused position information of each second vertex in the second vertex set is determined according to step S1045B.

Step S1044B: Determine fused position information of each first vertex in the first vertex set from the candidate fused position matrix.

In the embodiments of this disclosure, the fused position information of the first vertex is determined based on the row vector corresponding to the first vertex in the candidate fused position matrix. For example, an ith vertex is the first vertex, and the row vector corresponding to an ith row in the candidate fused position matrix is acquired. Assuming that the row vector is $\left[ x_{i1}^{'}, x_{i2}^{'}, x_{i3}^{'} \right]$ , the fused position information of the $i^{th}$ vertex is $\left( x_{i1}^{'}, x_{i2}^{'}, x_{i3}^{'} \right)$ .

Step S1045B: Determine fused position information of each second vertex in the second vertex set based on the fused neutral facial model.

In the embodiments of this disclosure, the fused position information of the corresponding position in the fused neutral facial model serves as fused position information corresponding to the second vertex. For example, a jth vertex is the second vertex, the position information of the jth vertex is acquired from the fused neutral facial model, and the position information of the jth vertex obtained from the fused neutral facial model is determined as the fused position information of the jth vertex.

Through steps S1041B to S1045B, the fused position information of each vertex can be determined based on the connecting matrix, the candidate fused position matrix and the fused neutral model of the initial neutral facial model corresponding to the at least two initial expression models, the candidate fused position information in the candidate fused position matrix is determined as the fused position information of the first vertex which moves relative to the initial neutral facial model, and the position information of the corresponding vertex in the fused neutral model is determined as the fused position information of the second vertex which does not move, so that the facial model deformation problem caused by different change amplitudes of the vertexes of different initial expression facial models can be avoided.

In some embodiments, to make the solved vertex position smoother, "determine a candidate fused position matrix of the at least two initial expression facial models based on the fused edge vector of the connecting edge and the connecting matrix" in step S423 may be implemented through the following steps S4231 to S4232. Each step is described below.

Step S4231: Multiply the first product matrix by an inverse matrix of the first product matrix to obtain a second product matrix, and determine an inverse matrix of the second product matrix as a second inverse matrix.

The second product matrix is $M^T \times M \times M^T \times M$, and the second inverse matrix is $(M^T \times M \times M^T \times M)^{-1}$

Step S4232: Determine the candidate fused position matrix of the at least two initial expression facial models based on the second inverse matrix, the first product matrix, the transposed matrix and the fused edge matrix.

To make the solved vertex position smoother, in the embodiments of this disclosure, two sides of the formula (1-2) are multiplied by $M^T \times M$ simultaneously to obtain a formula (1-3):

$$M^T \times M \times M^T \times M \times X' = M^T \times M \times M^T \times D \qquad (1\text{-}3);$$

The candidate fused position matrix $X' = (M^T \times M \times M^T \times M)^{-1} \times M^T \times M \times M^T \times D$ is obtained by solving the formula (1-3), that is, the candidate fused position matrix is the product of the second inverse matrix, the first product matrix, the transposed matrix and the fused edge matrix.

In some embodiments, "determine a first vertex set which moves and a second vertex set which does not move based on the position information of each vertex of the at least two initial expression facial models and the position information of each vertex of the at least two initial neutral facial models" in step S1043B may be implemented through the following steps S431 to S433. Each step is described below.

Step S431: Determine a distance between an ith vertex in a kth initial expression facial model and an ith vertex in a kth initial neutral facial model,
where k=1, 2,..., and K, K is the total number of the initial expression facial models; i=1, 2,..., and V, V is the total number of the vertexes, and V and K are integers greater than 1.

Since each initial expression facial model corresponds to one initial neutral facial model, then distance information corresponding to each vertex may be determined based on the position information of each vertex in the initial expression facial model and the position information of each vertex in the initial neutral facial model corresponding to the initial expression facial model, where the distance information corresponding to each vertex includes K distance values.

Step S432: In a case that K distances corresponding to the $i^{th}$ vertex are less than or equal to a preset threshold, determine the $i^{th}$ vertex as a second vertex which does not move.

For example, there are three initial expression facial models A1, A2 and A3, and correspondingly, there are three initial neutral facial models, namely B1, B2 and B3. The distance between a 1st vertex in A1 and a 1st vertex in B1 is 0.2, the distance between a 1st vertex in A2 and a 1st vertex in B2 is 0, the distance between a 1st vertex in A3 and a 1st vertex in B3 is 0.1, and the distance threshold is 0.5. Since 0.2, 0 and 0.1 are less than 0.5, the 1st vertex is determined as the second vertex which does not move.

Step S433: In a case that at least one distance of the K distances corresponding to the ith vertex is greater than the preset threshold, determine the ith vertex as a first vertex which moves.

In a case that only one of K distances corresponding to the ith vertex is greater than a preset threshold, the ith vertex is considered as the first vertex which moves.

In some embodiments, before step S105, that is, after the terminal outputs the fused facial model on the display apparatus, in case that it is determined that the fused facial model does not meet the expectation, the fused facial model may be adjusted continuously through the following steps S106 to S107. Each step is described below.

Step S106: In a case of determining that the weight corresponding to each of the initial facial models is required to be adjusted after outputting the fused facial model, adjust the fused weight corresponding to each of the initial facial models based on the fused facial model and each of the initial facial models to obtain each adjusted weight.

Step S107: Perform fusion processing on each of the initial facial models based on each adjusted weight to obtain an adjusted fused facial model.

The steps S106 to S107 are performed by the terminal. After the terminal outputs the fused facial model and when it is determined that the fused facial model does not meet the expectation, the fused facial model may be adjusted by adjusting the fused weight of each of the initial facial models. For example, eyes in the fused facial models are required to be enlarged, then it is necessary to increase the fused weight of the large eyes in the initial facial models, the fused weight of the small eyes is reduced, and each of the initial facial models is fused according to the adjusted weight to obtain the adjusted fused facial model. In this way, the fused facial model may be adjusted only by adjusting the fused weight, and the adjustment efficiency can be improved.

Certainly, in some embodiments, in case that the obtained fused facial model is quite different from the expectation, the fused facial model may be adjusted by replacing the initial facial model.

Based on the foregoing embodiments, the embodiments of this disclosure further provide a method for constructing a digital virtual human. The method may be implemented by the following steps S201 to S203. Each step is described below.

Step S201: Acquire facial model information of the digital virtual human.

The digital virtual human refers to a virtual character with a digital shape, and is a comprehensive product which is present in a non-physical world, created and used by computer methods such as computer graphics, graphical rendering, action capture, deep learning and speech synthesis, and has multiple human features.

In the embodiments of this disclosure, the facial model information of the digital virtual human is obtained by the image data processing method provided by other embodiments.

Step S202: Acquire limb model information of the digital virtual human.

In the embodiments of this disclosure, the limb model information may include model information of limbs and a trunk. During the implementation of step S202, preset limb model information may be acquired directly from a limb model library, and parameters of the limb model may be set according to the requirement. For example, a length of an arm and a length of double legs may be set, and the limb model information may be determined based on the set limb model parameters.

Step S203: Construct the digital virtual human based on the facial model information and the limb model information.

In the method for constructing the digital virtual human provided by the embodiments of this disclosure, since the facial model information of the digital virtual human is obtained based on the image data processing method provided by other embodiments, in the image processing method, the connecting edge in the initial facial model is subjected weighted summation by the fused weight to obtain the fused edge vector of the connecting edge, and the fused position information of each vertex is inversely calculated by the fused edge vector; therefore, the fused position of the vertex will be constrained by the position information of the other vertex located at the same connecting edge and the fused edge vector of the connecting edge, no dislocation or deformation of each part in the facial model can be ensued, and the fusion accuracy of the facial model can be ensured, thereby ensuring the naturalness of the obtained digital virtual human can be ensured.

The exemplary application of the embodiments of this disclosure in one actual application scenario is described below. In the embodiments of this disclosure, the case where the facial model is a human face model is taken as an example for description.

In the related art, the face fusion method performs data preprocessing of face area "alignment" on the input facial model. For the facial model with inconsistent face size or different ratios of the five sense organs, the mixed result is often unideal, and the problem of dislocation of the five sense organs is present. The embodiments of this disclosure provide a three-dimensional face fusion method based on a gradient domain.

In the embodiments of this disclosure, fusion of the human face model is taken as an example for description. The application scenario of the face fusion method provided by the embodiments of this disclosure includes a digital human manufacturing scenario. The fused facial model may be obtained rapidly by the face fusion method provided by the embodiments of this disclosure only by providing one group of facial models with unified topology (the neutral human face model and the human face blendshape model), thereby greatly saving the model manufacturing and model modification time.

FIG. 6 is a schematic diagram of still another implementation process of a human face fusion method according to an embodiment of this disclosure. As shown in FIG. 6, the process includes:

Step S601: Determine a mesh gradient.

In step S601, input information includes at least two facial models. In the embodiments of this disclosure, the facial models may be neutral facial models, that is, facial models which only reflect the ratio of the five sense organs and do not have expressions. The facial models are three-dimensional facial models. These facial models have the consistent topological structure, that is, the facial models have the same number of vertexes, and each vertex has the same connecting relationship. Assuming that each facial model has V vertexes, the ith vertex is represented as $v_i$, and the vertexes $v_i$ and $v_j$ are connected to obtain a connecting edge $e_{ij}$. In this step, the mesh gradient of each facial model is determined, that is, the edge vector of each connecting edge in each input model is determined. The step may be implemented by a formula (2-1):

$$e_{ij}^{k} = v_{i}^{k} - v_{j}^{k} \tag{2-1},$$

where $v_i^k$ represents the ith vertex of a kth model, and $e_{ij}^k$ represents the edge vector of the connecting edge which is obtained by connecting the ith vertex and the jth vertex in the kth model.

Step S602: Determine a connecting matrix.

In the embodiments of this disclosure, the connecting matrix is determined according to the relationship attribute of a human face mesh. Assuming that the facial model has V vertexes and E connecting edges, the connecting matrix M of the facial model is a matrix of E*V. In a case that the vertexes of the first connecting edge are the ith vertex and the jth vertex, M1i=1, M1j=1, other elements in the first row are 0, that is, in the matrix M, and in each row, two elements are 1 and other elements are 0.

Step S603: Acquire a set human face mixed weight (corresponding to the fused weight in other embodiments).

In the embodiments of this disclosure, the human face mixed weight is represented as a face dividing area graph shown in FIG. 7, and each human face area is represented by one pattern through filling. Vertexes marked as the same pattern filling have the same human face mixed weight. Artists or designers may set the mixed weight of each human face area according to their own requirements so as to control the biological features of the finally mixed human face.

Step S604: Determine a mixed weight mesh gradient (corresponding to the fused edge vector in other embodiments).

During the implementation of step S604, the mixed weighted mesh gradient is determined according to the edge vector of each connecting edge in each input facial model and the human face mixed weight, that is, the fused edge vector of each connecting edge in the facial model is determined. The fused edge vector of each connecting edge in the facial model may be determined through a formula (2-2):

$$d^{q} = \sum_{k=1}^{K} w_{i}^{k} e_{ij}^{k} \tag{2-2},$$

where $d^q$ represents a qth fused edge vector, or may be represented as $d_{ij}$, that is, the fused edge vector of the connecting edge obtained by connecting $v_i$ and $v_j$, and $w_i^k$ represents the mixed weight corresponding to the vertex $v_i$ in the kth model.

Step S605: Reconstruct a vertex position.

During the implementation of step S605, all the vertex positions are reconstructed according to the fused edge vector of the connecting edge and the connecting matrix. Assuming that the fused position matrix formed by all the vertexes is denoted as X, X may be obtained by solving a system equation (2-3):

$$M * X = D \tag{2-3},$$

where M is a matrix of E*V, X is a matrix of V*3, and D is a matrix of E*3. Since the matrix M is not full-rank, it is necessary to select one fixed point as a Dirichlet boundary condition for solving.

To make the obtained solution (that is, the fused position matrix X) more stable, both sides of the equal sign of the system equation (2-3) may be multiplied with the transposition of the matrix M, that is, a system equation (2-4) is obtained:

$$M^T * M * X = M^T * D \tag{2-4}.$$

It may be obtained according to the system equation (2-4), and X may be represented by a formula (2-5):

$$X = (M^T * M)^{-1} * M^T * D \tag{2-5}.$$

A neutral human face may be mixed through the above steps S601 to S605. In the actual production process of a digital human, in addition to generating neutral human face models, it is necessary to generate corresponding human face deformation models (corresponding to the initial expression facial models in other embodiments). The fusion process of the human face deformation model corresponding to the plurality of neutral human face models are described below.

Since the moving amplitude of the vertexes in different human face deformation models (corresponding to the initial expression facial models in other embodiments) relative to the neutral human face models, the fusion result of the human face deformation models often has the vertex displacement deviation relative to the neutral human face models. To solve the problem, before the human face deformation models are mixed, the previous five steps are the same as the above steps S601 to S604; and after step S604, the final vertex reconstructed positions (corresponding to the fused position information in other embodiments) may be obtained through the following two steps:

step S605': Based on the formula (2-4), multiply both sides by the matrix $M^T * M$ simultaneously, so that the solved vertex position is smoother;

based on the formula (2-4), multiply both sides by the matrix simultaneously $M^T * M$ to obtain a formula (2-6):

$$M^T \times M \times M^T \times M \times X = M^T \times M \times M^T \times D \tag{2-6};$$

and
solve the formula (2-6) to obtain $X = (M^T \times M \times M^T \times M)^{-1} \times M^T \times M \times M^T \times D$.

Step S606': For the solved vertex position, perform filtering post-processing as follows:
sequentially determine whether each vertex in the initial human face deformation model moves relative to the initial neutral human face. The determining criteria is: it can be considered that the vertex remains static in the fusion result only in a case that the vertex in each initial human face deformation model does not move relative to the initial neutral human face, that is, the vertex does not move, and at this time, the position information of the vertex in the mixed neutral human face model is determined as the fused position information of the vertex; and otherwise, it is considered that the vertex moves relative to the neutral human face model, and at this time, the fused position information of the vertex is determined based on the result in step S605'.

Through the above two steps, the fusion result of the final human face deformation model is relatively smooth, and erroneous or unsmooth displacement is avoided.

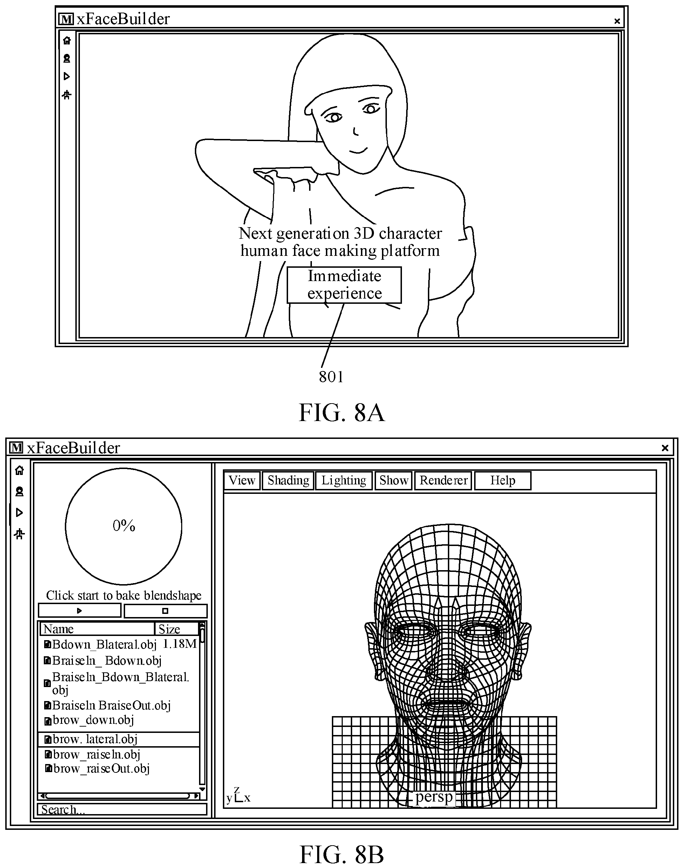

FIG. 8A is a schematic diagram of a start interface of a human face mixing tool corresponding to a human face model method according to an embodiment of this disclosure. When an "immediate experience" control 801 in FIG. 8A is clicked, the interface shown in FIG. 8B may be presented. Through the interface, a to-be-fused human face model may be selected, and a mixed weight may be set, so that the fused three-dimensional facial model may be obtained rapidly by the human face mixing tool. On one hand, the working time of the modeler can be saved, and on the other hand, various human face models can be generated rapidly, and a wide application scenario is achieved.

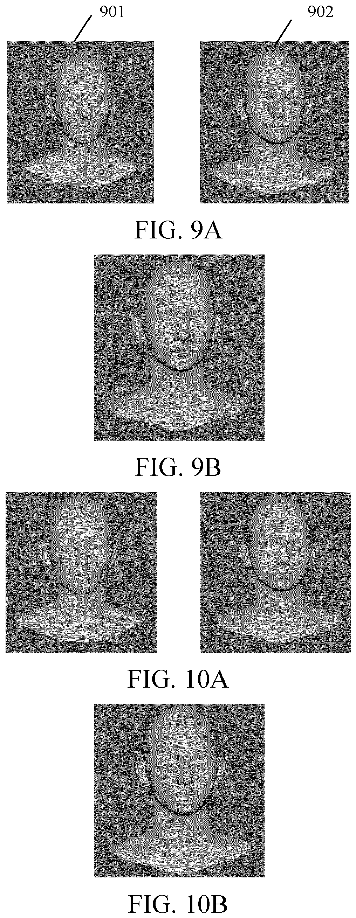

FIG. 9A is a schematic diagram of an input neutral human face model. As shown in FIG. 9A, 901 is an input neutral human face 1 and 902 is an input neutral human face 2. FIG. 9B is a schematic diagram of a result of neutral human face fusion performed by a human face fusion method according to an embodiment of this disclosure. It can be seen by comparing FIG. 9A with FIG. 9B that in the fused human face model, eyes are closer to those of the neutral human face 1, and other parts are closer to those of the neutral human face 2.

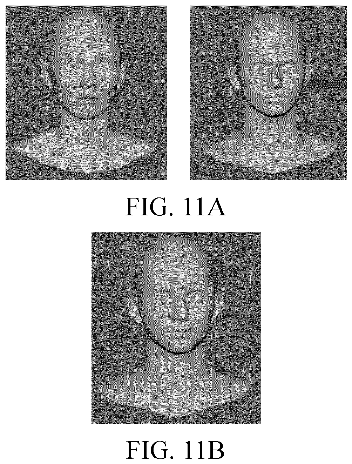

FIG. 10A is a schematic diagram of an input eye-closing expression human face model, and FIG. 10B is a schematic diagram of a result of eye-closing human face fusion performed by a human face fusion method according to an embodiment of this disclosure. FIG. 11A is a schematic diagram of an input look-up expression human face model, and FIG. 11B is a schematic diagram of a result of look-up human face fusion performed by a human face fusion method according to an embodiment of this disclosure. It can be seen from FIG. 9B, FIG. 10B and FIG. 11B that the fused human face model is not deformed, and erroneous or unsmooth displacement is avoided.

In the human face fusion method provided by the embodiments of this disclosure, the average position (corresponding to the fused edge vector in other embodiments) of each connecting edge in the input model is determined first, and then the positions (corresponding to the fused position information in other embodiments) of all the vertex are globally calculated according to the average position of all the edges to obtain the final mixed human face model. In the embodiments of this disclosure, any preprocessing is not required for the input human face model, and any postprocessing is not required for the mixed result, for example, Laplacian smoothing; therefore, the processing quality and the universality are improved compared with the human face fusion method in the related art.

The implementation of the terminal apparatus 455 provided by the embodiments of this disclosure is continuously described below as an exemplary structure of a software module. In some embodiments, as shown in FIG. 2, the software module stored in the facial model fusion apparatus 455 of the memory 450 may include:

a first acquisition module 4551, configured to acquire at least two to-be-fused initial facial models, and acquire a fused weight corresponding to each of the initial facial models, the at least two initial facial models having the same topological structure; a first determining module 4552, configured to determine an edge vector of a connecting edge in each of the initial facial models and a connecting matrix of each of the initial facial models based on topological structure information of each of the initial facial models; a second determining module 4553, configured to determine a fused edge vector of the connecting edge based on the fused weight corresponding to each of the initial facial models and the edge vector of the connecting edge in each of the initial facial models; a third determining module 4554, configured to determine fused position information of each vertex based on the fused edge vector of the connecting edge and the connecting matrix; and a model generation module 4555, configured to generate a fused facial model based on the fused position information of each vertex.

In some embodiments, the first determining module is further configured to: acquire position information of vertexes in each of the initial facial models, and connect information of the vertexes based on the topological structure information of each of the initial facial models; determine the edge vector of the connecting edge in each of the initial facial models based on the position information of the vertexes in each of the initial facial models and the connecting information of the vertexes; and The connecting matrix of each initial facial model is determined based on the connecting information between vertexes in each initial facial model, where the dimension of the connecting matrix is E*V, E is the number of the connecting edges in the initial facial model, and V is the number of the vertexes in the initial facial model. In a case that the two vertexes have the connecting relationship, elements corresponding to the two vertexes in the connecting matrix are a first preset value. In a case that the two vertexes do not have the connecting relationship, the elements corresponding to the two vertexes in the connecting matrix are a second preset value. The first preset value and the second preset value are different.

In some embodiments, the first acquisition module is further configured to: acquire a preset face dividing area graph, where the face dividing area graph includes a plurality of areas, and different areas correspond to different physiological parts; and acquire fused weights of different areas in each of the initial facial models in response to weight setting operations of different areas in each of the initial facial models.

In some embodiments, the second determining module is further configured to: determine an area where a connecting edge is located based on position information of the vertexes of the connecting edge in each of the initial facial models; acquire each fused weight corresponding to the area in each of the initial facial models; and perform weighted summation on the edge vector of the connecting edge in each of the initial facial models and each fused weight to obtain the fused edge vector of the connecting edge.

In some embodiments, in a case that the at least two initial facial models are at least two initial neutral facial models, the third determining module is configured to: construct a fused edge matrix based on the fused edge vector of the connecting edge; determine a transposed matrix of the connecting matrix, multiply the transposed matrix of the connecting matrix by the connecting matrix to obtain a first product matrix, and determine an inverse matrix of the first product matrix as a first inverse matrix; and determine a fused position matrix based on the first inverse matrix, the connecting matrix and the fused edge matrix; and determine the fused position information of each vertex based on the fused position matrix.

In some embodiments, in a case that the at least two initial facial models are at least two initial expression facial models, the third determining module is further configured to: acquire at least two initial neutral facial models respectively corresponding to the at least two initial expression facial models, and acquire a fused neutral facial model of the at least two initial neutral facial models; determine a candidate fused position matrix of the at least two initial expression facial models based on the fused edge vector of the connecting edge and the connecting matrix; determine a first vertex set which moves and a second vertex set which does not move based on the position information of each vertex of the at least two initial expression facial models and the position information of each vertex of the at least two initial neutral facial models; determine fused position information of each first vertex in the first vertex set from the candidate fused position matrix; and determine fused position information of each second vertex in the second vertex set based on the fused neutral facial model.

In some embodiments, the third determining module is further configured to: construct a fused edge matrix based on the fused edge vector of the connecting edge; determine a transposed matrix of the connecting matrix, multiply the transposed matrix of the connecting matrix with the connecting matrix to obtain a first product matrix, and determine an inverse matrix of the first product matrix as a first inverse matrix; and determining the candidate fused position matrix of the at least two initial expression facial models based on the first inverse matrix, the connecting matrix and the fused edge matrix.

In some embodiments, the third determining module is further configured to: multiply the first product matrix by the first product matrix to obtain a second product matrix, and determine an inverse matrix of the second product matrix as a second inverse matrix; and determine the candidate fused position matrix of the at least two initial expression facial models based on the second inverse matrix, the first product matrix, the transposed matrix and the fused edge matrix.

In some embodiments, the third determining module is further configured to: determine a distance between an ith vertex in a kth initial expression facial model and an ith vertex in a kth initial neutral facial model, where k=1, 2,..., and K, K is the total number of the initial expression facial models, i=1, 2,..., and V, V is the total number of the vertexes, and V and K are integers greater than 1; in a case that K distances corresponding to the ith vertex are less than or equal to a preset threshold, determine the ith vertex as a second vertex which does not move; and in a case that at least one distance of the K distances corresponding to the ith vertex is greater than the preset threshold, determine the ith vertex as a first vertex which moves.

In some embodiments, the apparatus further includes: an adjustment module, configured to: in a case of determining that the weight corresponding to each of the initial facial models is required to be adjusted after outputting the fused facial model, adjust the weight corresponding to each of the initial facial models based on the fused facial model and each of the initial facial models to obtain each adjusted weight; a fusion processing module, configured to perform fusion processing on each of the initial facial models based on each adjusted weight to obtain an adjusted fused facial model; and a model output model, configured to output the adjusted fused facial model.

The description of the image data processing apparatus in the embodiments of this disclosure are similar to the description of the method embodiment, and the apparatus has the beneficial effects similar to those of the method embodiment. Refer to descriptions in the method embodiments of this disclosure for technical details undisclosed in the apparatus embodiments of this disclosure.

In some embodiments, the digital virtual human constructing apparatus provided by the embodiments of this disclosure may be implemented by software, which may be software in the form of a program or a plug-in, including the following software modules: a second acquisition module, a third acquisition module and a construction module. These modules are logic, so the modules may be arbitrarily combined or further split according to the implemented function. The function of each module is described as follows:

a second acquisition module, configured to acquire facial model information of the digital virtual human, where the facial model information is obtained by the image data processing method provided by the embodiments of this disclosure;

a third acquisition module, configured to acquire limb model information of the digital virtual human; and

a construction module, configured to construct the digital virtual human based on the facial model information and the limb model information.

The description of the digital virtual human constructing apparatus is similar to the description of the method embodiment, and the apparatus embodiment has the beneficial effects similar to those of the method embodiment. Refer to descriptions in the method embodiments of this disclosure for technical details undisclosed in the apparatus embodiments of this disclosure.

The embodiments of this disclosure provide a computer program product or a computer program. The computer program product or the computer program includes a computer instruction, and the computer instruction is stored in a computer-readable storage medium. A processor of a computer device reads the computer instruction from the computer-readable storage medium, and executes the computer instruction to cause the computer device to perform the image processing method according to the embodiments of this disclosure.

The embodiments of this disclosure provide a computer-readable storage medium storing an executable instruction. The computer-readable storage medium stores the executable instruction. When being executed by the processor, the executable instruction causes the processor to perform the image data processing method provided by the embodiments of this disclosure, for example, the image data processing method shown in FIG. 3, FIG. 4, FIG. 5 and FIG. 6.

In some embodiments, the computer-readable storage medium may be an FRAM, an ROM, a PROM, an EPROM, an EEPROM, a flash memory, a magnetic surface memory, an optical disk or a CD-ROM, or may be various devices including one of the above memories or any combination thereof.

In some embodiments, the executable instruction may be written by any form of programming language (including compiled language or interpretive language, or declarative language or procedural language) in the form of a program, software, a software module, a script or a code, and may be deployed in any form, including other units which are deployed as an independent program or are deployed as a module, a component, a subroutine or are suitable for being used in a computing environment.

As an example, the executable instruction may, but not necessarily, correspond to a file in a file system, and may be stored in a part of a file for saving other programs or data, for example, stored in one or more scripts in a hyper text markup language, stored in a single file special for the discussed program, or stored in a plurality of collaborative files (for example, fives for storing one or more modules, subprograms or codes).

As an example, the executable instruction may be deployed to be executed on a single computing device, or be executed on a plurality of computing devices located at one placed, or be distributed at a plurality of places and be executed on a plurality of computing devices interconnected through a communication network.

The above are merely preferred embodiments of this disclosure and are not intended to limit the protection scope of this disclosure. Any modification, equivalent replacement, or improvement made without departing from the spirit and scope of this disclosure is to fall within the protection scope of this disclosure.

**Claims**

1. A method for processing image data, executable by a computer device, and comprising:

    acquiring at least two initial facial models, and acquiring a pre-defined weight for each of the initial facial models, the at least two initial facial models having a same topological structure;
    determining edge vectors of connecting edges and a connecting matrix of each of the initial facial models based on topological structure information of each of the initial facial models;
    determining, for each of the connecting edges, a fused edge vector of the connecting edge based on the weights for the respective initial facial models and edge vectors of the connecting edge in the respective initial facial models;
    determining fused position information of vertexes in the initial facial models based on the fused edge vectors of the connecting edges and the connecting matrix; and
    generating a fused facial model based on the fused position information of the vertexes.

2. The method according to claim 1, wherein the determining edge vectors of connecting edges and a connecting matrix of each of the initial facial models based on topological structure information of each of the initial facial models comprises:

    acquiring position information and connecting information of vertexes in each of the initial facial models based on the topological structure information of each of the initial facial models;
    determining the edge vectors of the connecting edges in each of the initial facial models based on the position information of the vertexes in each of the initial facial models and the connecting information of the vertexes; and
    determining the connecting matrix of each of the initial facial models based on the connecting information of the vertexes, wherein a dimension of the connecting matrix being E*V, E being the number of the connecting edges in the initial facial models, and V being the number of the vertexes in the initial facial models.

3. The method according to claim 1, wherein the acquiring a pre-defined weight for each of the initial facial models comprises:

    acquiring a preset face dividing area graph, the face dividing area graph comprising a plurality of areas, and each area corresponding to a respective physiological part of a human face; and
    acquiring weights of different areas in each of the initial facial models in response to weight setting operations of different areas in each of the initial facial models.

4. The method according to claim 3, wherein the determining, for each of the connecting edges, a fused edge vector of the connecting edge based on the weights for the respective initial facial models and the edge vectors of the connecting edge in the respective initial facial models comprises: for each of the connecting edges,

    determining an area where the connecting edge is located based on position information of the vertexes of the connecting edge in each of the initial facial models;
    acquiring a weight corresponding to the area in each of the initial facial models; and

performing weighted summation on the edge vector of the connecting edge in each of the initial facial models and the corresponding weight to obtain the fused edge vector of the connecting edge.

5. The method according to claim 1, wherein in a case that the at least two initial facial models are at least two initial neutral facial models, the determining fused position information of vertexes in the initial facial models based on the fused edge vectors of the connecting edges and the connecting matrix comprises:

constructing a fused edge matrix based on the fused edge vectors of the connecting edges;
determining a transposed matrix of the connecting matrix, multiplying the transposed matrix of the connecting matrix by the connecting matrix to obtain a first product matrix, and determining an inverse matrix of the first product matrix as a first inverse matrix;
determining a fused position matrix based on the first inverse matrix, the connecting matrix and the fused edge matrix; and
determining the fused position information of the vertexes based on the fused position matrix.

6. The method according to claim 1, wherein in a case that the at least two initial facial models are at least two initial expression facial models, the determining fused position information of vertexes in the initial facial models based on the fused edge vectors of the connecting edges and the connecting matrix comprises:

acquiring at least two initial neutral facial models each corresponding to one of the at least two initial expression facial models, and acquiring a fused neutral facial model of the at least two initial neutral facial models;
determining a candidate fused position matrix of the at least two initial expression facial models based on the fused edge vectors of the connecting edges and the connecting matrix;
determining a first vertex set which moves and a second vertex set which does not move based on the position information of each vertex of the at least two initial expression facial models and the position information of each vertex of the at least two initial neutral facial models;
determining fused position information of each first vertex in the first vertex set from the candidate fused position matrix; and
determining fused position information of each second vertex in the second vertex set based on the fused neutral facial model.

7. The method according to claim 6, wherein the determining a candidate fused position matrix of the at least two initial expression facial models based on the fused edge vectors of the connecting edges and the connecting matrix comprises:

constructing a fused edge matrix based on the fused edge vectors of the connecting edges;
determining a transposed matrix of the connecting matrix, multiplying the transposed matrix of the connecting matrix by the connecting matrix to obtain a first product matrix, and determining an inverse matrix of the first product matrix as a first inverse matrix; and
determining the candidate fused position matrix of the at least two initial expression facial models based on the first inverse matrix, the connecting matrix and the fused edge matrix.

8. The method according to claim 7, wherein the determining a candidate fused position matrix of the at least two initial expression facial models based on the fused edge vectors of the connecting edges and the connecting matrix comprises:

multiplying the first product matrix by the first product matrix to obtain a second product matrix, and determining an inverse matrix of the second product matrix as a second inverse matrix; and
determining the candidate fused position matrix of the at least two initial expression facial models based on the second inverse matrix, the first product matrix, the transposed matrix and the fused edge matrix.

9. The method according to claim 6, wherein the determining a first vertex set which moves and a second vertex set which does not move based on the position information of each vertex of the at least two initial expression facial models and the position information of each vertex of the at least two initial neutral facial models comprises:

determining a distance between an i-th vertex in a k-th initial expression facial model and an i-th vertex in a k-th initial neutral facial model, k=1, 2,..., and K, K being a total number of the initial expression facial models, i=1, 2,..., and V, V being a total number of the vertexes, and V and K being integers greater than 1;

in a case that K distances corresponding to the i-th vertex are less than or equal to a preset threshold, determining the i-th vertex as a second vertex which does not move; and

in a case that at least one distance of the K distances corresponding to the i-th vertex is greater than the preset threshold, determining the i-th vertex as a first vertex which moves.

10. The method according to any one of claims 1 to 9, further comprising:

in a case of determining that the weight for each of the initial facial models is required to be adjusted after the fused facial model is output, adjusting the weight for each of the initial facial models based on the fused facial model and each of the initial facial models to obtain each adjusted weight;

performing fusion processing on each of the initial facial models based on each adjusted weight to obtain an adjusted fused facial model; and

outputting the adjusted fused facial model.

11. A method for constructing a digital virtual human, comprising:

acquiring facial model information of the digital virtual human, the facial model information being obtained by the method according to any one of claims 1 to 10;

acquiring limb model information of the digital virtual human; and

constructing the digital virtual human based on the facial model information and the limb model information.

12. An apparatus for processing image data, comprising:

a first acquisition module, configured to acquire at least two initial facial models, and acquire a pre-defined weight for each of the initial facial models, the at least two initial facial models having a same topological structure;

a first determining module, configured to determine edge vectors of connecting edges and a connecting matrix of each of the initial facial models based on topological structure information of each of the initial facial models;

a second determining module, configured to determine, for each of the connecting edges, a fused edge vector of the connecting edge based on the weights for the respective initial facial models and edge vectors of the connecting edge in the respective initial facial models;

a third determining module, configured to determine fused position information of vertexes in the initial facial models based on the fused edge vectors of the connecting edges and the connecting matrix; and

a model generation module, configured to generate a fused facial model based on the fused position information of the vertexes.

13. An apparatus for constructing a digital virtual human, comprising:

a second acquisition module, configured to acquire facial model information of the digital virtual human, the facial model information being obtained by the method according to any one of claims 1 to 10;

a third acquisition module, configured to acquire limb model information of the digital virtual human; and

a construction module, configured to construct the digital virtual human based on the facial model information and the limb model information.

14. A computer device, comprising:

a memory, configured to store an executable instruction; and

a processor, configured to implement, when executing the executable instruction stored in the memory, the method according to any one of claims 1 to 10 or the method according to claim 11.

15. A computer-readable storage medium, storing an executable instruction, wherein when being executed by a processor, the executable instruction implements the method according to any one of claims 1 to 10 or the method according to claim 11.

16. A computer program product, comprising a computer program or instruction, wherein when being executed by a processor, the computer program or instruction implements the method according to any one of claims 1 to 10 or the method according to claim 11.

100

Server 200

5. Fused facial model

2. Facial model library

1. Acquire a facial model library

Network 300

1. Acquire a facial model library

2. Facial model library

5. Fused facial model

Terminal 400

3. Acquire to-be-fused initial facial models and a fused weight to each of the initial facial models
4. Obtain a fused facial model based on each initial facial model and each fused weight

FIG. 1

Terminal
400

Memory 450

| Operating system 451 |
| Network communication module 452 |
| Presentation module 453 |
| Input processing module 454 |
| Image data processing apparatus 455 |

Network
interface 420

Processor
410

440

User interface 430

Output apparatus
431

Input apparatus
432

First acquisition module 4551

First determining module 4552

Second determining module 4553

Third determining module 4554

Model generation module 4555

FIG. 2

| Acquire at least two to-be-fused initial facial models, and acquire a fused weight corresponding to each of the initial facial models | S101 |

↓

| Determine an edge vector of a connecting edge in each of the initial facial models and a connecting matrix of each of the initial facial models based on topological structure information of each of the initial facial models | S102 |

↓

| Determine a fused edge vector of the connecting edge based on the fused weight corresponding to each of the initial facial models and the edge vector of the connecting edge in each of the initial facial models | S103 |

↓

| Determine fused position information of each vertex based on the fused edge vector of the connecting edge and the connecting matrix | S104 |

↓

| Generate a fused facial model based on the fused position information of each vertex | S105 |

FIG. 3

Acquire at least two to-be-fused initial facial models, and acquire a fused weight corresponding to each of the initial facial models — S101

Determine an edge vector of a connecting edge in each of the initial facial models and a connecting matrix of each of the initial facial models based on topological structure information of each of the initial facial models — S102

Determine a fused edge vector of the connecting edge based on the fused weight corresponding to each of the initial facial models and the edge vector of the connecting edge in each of the initial facial models — S103

Construct a fused edge matrix based on the fused edge vector of the connecting edge — S1041A

Determine a transposed matrix of a connecting matrix, multiply the transposed matrix of the connecting matrix by the connecting matrix to obtain a first product matrix, and determine an inverse matrix of the first product matrix as a first inverse matrix — S1042A

Determine a fused position matrix based on the first inverse matrix, the connecting matrix and the fused edge matrix — S1043A

Determine the fused position information of each vertex based on the fused position matrix — S1044A

S104

Generate a fused facial model based on the fused position information of each vertex — S105

FIG. 4

Acquire at least two to-be-fused initial facial models, and acquire a fused weight corresponding to each of the initial facial models — S101

Determine an edge vector of a connecting edge in each of the initial facial models and a connecting matrix of each of the initial facial models based on topological structure information of each of the initial facial models — S102

Determine a fused edge vector of the connecting edge based on the fused weight corresponding to each of the initial facial models and the edge vector of the connecting edge in each of the initial facial models — S103

Acquire at least two initial neutral facial models respectively corresponding to the at least two initial expression facial models, and acquire a fused neutral facial model of the at least two initial neutral facial models — S1041B

Determine a candidate fused position matrix of at least two initial expression facial models based on the fused edge vector of the connecting edge and connecting matrix — S1042B

Determine a first vertex set which moves and a second vertex set which does not move based on the position information of each vertex of the at least two initial expression facial models and the position information of each vertex of the at least two initial neutral facial models — S1043B

Determine fused position information of each first vertex in the first vertex set from the candidate fused position matrix — S1044B

Determine fused position information of each second vertex in the second vertex set based on the fused neutral facial model — S1044B

— S104

Generate a fused facial model based on the fused position information of each vertex — S105

FIG. 5

```
┌─────────────────────────────┐
│  Determine a mesh gradient   │─── S601
└─────────────────────────────┘
              │
              ▼
┌─────────────────────────────┐
│ Determine a connecting matrix │─── S602
└─────────────────────────────┘
              │
              ▼
┌─────────────────────────────┐
│   Acquire a set human face   │─── S603
│        Mixed weight          │
└─────────────────────────────┘
              │
              ▼
┌─────────────────────────────┐
│      Determine a mixed       │─── S604
│    weighted mesh gradient    │
└─────────────────────────────┘
              │
              ▼
┌─────────────────────────────┐
│ Reconstruct a vertex position │─── S605
└─────────────────────────────┘
```

FIG. 6

FIG. 7

Ⓜ xFaceBuilder ✕

Next generation 3D character
human face making platform

Immediate
experience

801

## FIG. 8A

Ⓜ xFaceBuilder ✕

| View | Shading | Lighting | Show | Renderer | Help |

0%

Click start to bake blendshape

▶ □

| Name | Size |
| --- | --- |
| Ⓜ Bdown_Blateral.obj | 1.18M |
| Ⓜ Braiseln_ Bdown.obj | |
| Ⓜ Braiseln_Bdown_Blateral. obj | |
| Ⓜ Braiseln BraiseOut.obj | |
| Ⓜ brow_down.obj | |
| Ⓜ brow. lateral.obj | |
| Ⓜ brow_raiseln.obj | |
| Ⓜ brow_raiseOut.obj | |

Search...

y⌞x    persp

## FIG. 8B

FIG. 9A

FIG. 9B

FIG. 10A

FIG. 10B

FIG. 11A

FIG. 11B

## INTERNATIONAL SEARCH REPORT

| | |
|---|---|
| International application No. | |
| | **PCT/CN2022/118952** |

**A.    CLASSIFICATION OF SUBJECT MATTER**

G06T 5/50(2006.01)i

According to International Patent Classification (IPC) or to both national classification and IPC

**B.    FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS; CNTXT; EPTXT; VEN; WOTXT; USTXT; CNKI; IEEE; BING: 面部, 脸部, 图像, 融合, 组合, 权重, 连接, 矩阵, 边, 顶点, 向量, 位置, 拓扑, 三维, 结构, 相同, 相似, face, image, fusion, combine, weight, connect, matrix, edge, vertex, vector, position, topology, 3D, structure, same, similar

**C.    DOCUMENTS CONSIDERED TO BE RELEVANT**

| Category* | Citation of document, with indication, where appropriate, of the relevant passages | Relevant to claim No. |
|---|---|---|
| PX | CN 114049287 A (TENCENT TECHNOLOGY SHENZHEN CO., LTD.) 15 February 2022 (2022-02-15)<br>    description, paragraphs 91-271 | 1-16 |
| Y | 小张Python (Non-official translation: Zhang Python). "想看两张脸合成一张脸的样子么, OpenCV 来帮你实现! (Non-official translation: Want to See Two Faces Synthesized into One Face? OpenCV to Help You Achieve!)"<br>*百度, Baidu, [在线], [online], [search date 14 November 2022]. search in the Internet <URL: https://www.jianshu. com/P/5afc8f9a8>,* 15 June 2020 (2020-06-15),<br>    pages 1-4 | 1-4, 10-16 |
| Y | Z先生点记 (Non-official translation: View Point Recorded by Mr.Z). "人脸融合技术, 用 Python-OpenCV 来帮你实现! (Non-official translation: Face Fusion Technology, OpenCV to Help You Achieve!)"<br>*百度, Baidu, [在线], [online], [search date 14 November 2022]. search in the Internet <URL: https://www.codetd.com/article/12179233>,* 23 January 2021 (2021-01-23),<br>    pages 1-4 | 1-4, 10-16 |
| Y | CN 106960459 A (BEIHANG UNIVERSITY) 18 July 2017 (2017-07-18)<br>    description, paragraphs 6-49 | 1-4, 10-16 |

☑ Further documents are listed in the continuation of Box C.        ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 November 2022** | **23 November 2022** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2022/118952** |

**C.    DOCUMENTS CONSIDERED TO BE RELEVANT**

| Category* | Citation of document, with indication, where appropriate, of the relevant passages | Relevant to claim No. |
|---|---|---|
| Y | US 2014375628 A1 (MARZA ANIMATION PLANET INC.) 25 December 2014 (2014-12-25) description, paragraphs 8-26 and 32-68 | 1-4, 10-16 |
| A | CN 109395390 A (NETEASE (HANGZHOU) NETWORK CO., LTD.) 01 March 2019 (2019-03-01) entire document | 1-16 |
| A | US 9747716 B1 (LUCASFILM ENTERTAINMENT CO., LTD.) 29 August 2017 (2017-08-29) entire document | 1-16 |

Form PCT/ISA/210 (second sheet) (January 2015)

INTERNATIONAL SEARCH REPORT
Information on patent family members

International application No.

**PCT/CN2022/118952**

| Patent document cited in search report | | | Publication date (day/month/year) | Patent family member(s) | | | Publication date (day/month/year) |
|---|---|---|---|---|---|---|---|
| CN | 114049287 | A | 15 February 2022 | None | | | |
| CN | 106960459 | A | 18 July 2017 | US | 2018182152 | A1 | 28 June 2018 |
| | | | | US | 10275922 | B2 | 30 April 2019 |
| | | | | CN | 106960459 | B | 26 July 2019 |
| US | 2014375628 | A1 | 25 December 2014 | US | 9202300 | B2 | 01 December 2015 |
| CN | 109395390 | A | 01 March 2019 | CN | 109395390 | B | 21 December 2021 |
| US | 9747716 | B1 | 29 August 2017 | US | 10489958 | B1 | 26 November 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111307659